# EUROPEAN PATENT APPLICATION

(11) **EP 4 485 914 A1**
(43) Date of publication of application: **01.01.2025**
(21) Application number: 22928647.1
(22) Date of filing: 25.02.2022
(51) Int. Cl.: H04M 11/00, H04M 1/00

(54) **INFORMATION PROCESSING TERMINAL, INFORMATION PROCESSING DEVICE, INFORMATION PROCESSING METHOD, AND INFORMATION PROCESSING PROGRAM**

(71) Applicant: Bsize Inc., Yokohama-shi, Kanagawa, 222-0033 (JP)
(72) Inventor: YAGI Keita, Yokohama-shi, Kanagawa 222-0033 (JP)
(74) Representative: EIP
(86) International application number: PCT/JP2022/007831
(87) International publication number: WO 2023/162120

(57) **Abstract**

To provide an information processing terminal, an information processing apparatus, an information processing method, and an information processing program with high convenience.

An information processing terminal according to the present invention includes: a receiver configured to receive data and a setting instruction for setting a notification pattern when notifying that the data has been received from a different terminal; a notifier configured to notify that the receiver has received the data; and a setting module configured to set a notification pattern of the notifier based on the setting instruction.

## Description

### Technical Field

The present invention relates to an information processing terminal, an information processing apparatus, an information processing method, and an information processing program capable of exchanging voice data.

### Background Art

When a child becomes a certain age, for example, an elementary school student, and the child often acts alone, a parent or guardian of the child is concerned about the action of the child, such as whether the child safely arrives at a school or a cram school without an accident or the like or whether the child returns home.

Therefore, as a mechanism for coping with the above problem, for example, a service that enables confirmation of position information of a child using a GPS function mounted on a portable information terminal such as a smartphone is provided (see, for example, Patent Literature 1) .

### Citation List

### Patent Literature

Patent Literature 1: JP 6953055 B2

### Summary of Invention

### Technical Problem

However, a conventional information processing system still has room for improvement in convenience.

The present invention has been made in view of the above problem, and an object thereof is to provide an information processing terminal, an information processing apparatus, an information processing method, and an information processing program with high convenience.

### Solution to Problem

In order to solve the above problem, an information processing terminal according to the present invention includes: a receiver configured to receive data and a setting instruction for setting a notification pattern when notifying that the data has been received from a different terminal; a notifier configured to notify that the receiver has received the data; and a setting module configured to set a notification pattern of the notifier based on the setting instruction.

### Advantageous Effects of Invention

According to the present invention, it is possible to provide an information processing terminal, an information processing apparatus, an information processing method, and an information processing program with high convenience.

### Brief Description of Drawings

Fig. 1 is a diagram illustrating an example of arrangement of an information processing system according to an embodiment.
Fig. 2 is a diagram illustrating an example of a configuration of an information processing server according to the embodiment.
Fig. 3 is a diagram illustrating an example of a configuration of an information processing apparatus server according to the embodiment.
Fig. 4 is a diagram illustrating an example of a configuration of a first user terminal according to the embodiment.
Fig. 5 is a diagram illustrating an example of a configuration of the first user terminal according to the embodiment.
Fig. 6 is a diagram illustrating an example of a configuration of a second user terminal according to the embodiment.
Fig. 7 is a diagram illustrating an example of a configuration of the second user terminal according to the embodiment.
Fig. 8 is a diagram illustrating an example of a screen displayed on a display device of the first user terminal according to the embodiment.
Fig. 9 is a diagram illustrating an example of the screen displayed on the display device of the first user terminal according to the embodiment.
Fig. 10 is a diagram illustrating an example of the screen displayed on the display device of the first user terminal according to the embodiment.
Fig. 11 is a diagram illustrating an example of the screen displayed on the display device of the first user terminal according to the embodiment.
Fig. 12 is a flowchart illustrating an example of processing by the information processing system according to the embodiment.
Fig. 13 is a flowchart illustrating an example of processing by the information processing system according to the embodiment.
Fig. 14 is a flowchart illustrating an example of processing by the information processing system according to the embodiment.
Fig. 15 is a flowchart illustrating an example of processing by the information processing system according to the embodiment.

### Description of Embodiments

### [Embodiment]

Hereinafter, an information processing system 1 according to an embodiment will be described with reference to the drawings.

The information processing system 1 according to the embodiment is a so-called monitoring system, in which a position of a second user terminal 4 is determined from information uploaded from the second user terminal 4 carried by a watching subject (for example, a child) to a server 2 at a predetermined interval such as every 1.5 minutes, for example, and the determined position is notified from the server 2 to a first user terminal 3 carried by or used by a watching person (for example, a family member such as a parent or a grandparent). Furthermore, the information processing system 1 according to the present embodiment includes a microphone and a speaker in the first user terminal 3 and the second user terminal 4, and is configured to be able to transmit and receive messages (hereinafter, also referred to as a voice message) by a voice to and from each other. In the following description, the watching person is also referred to as a first user. The watching subject is also referred to as a second user.

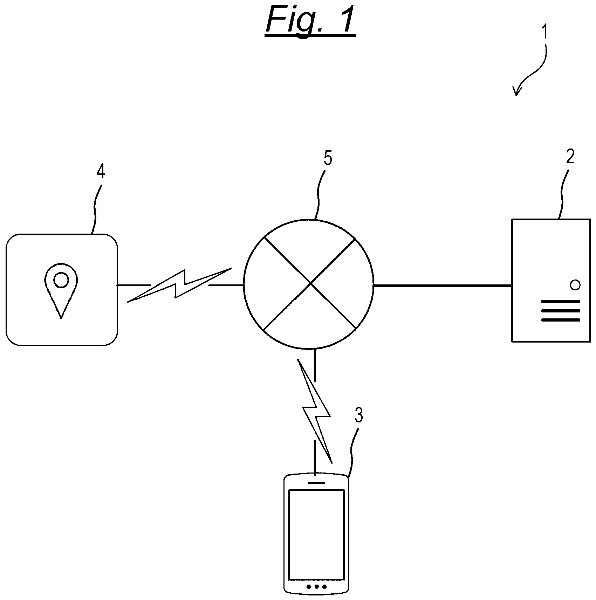

As illustrated in Fig. 1, the information processing system 1 includes a server 2 and one or more first user terminals 3 and a second user terminal 4 coupled to the server 2 via a network 5. In the example illustrated in Fig. 1, the information processing system 1 includes one server 2, one first user terminal 3, and one second user terminal 4, but the number of the servers 2, the number of the first user terminals 3, and the number of the second user terminals 4 included in the information processing system 1 are arbitrary.

### (Server 2)

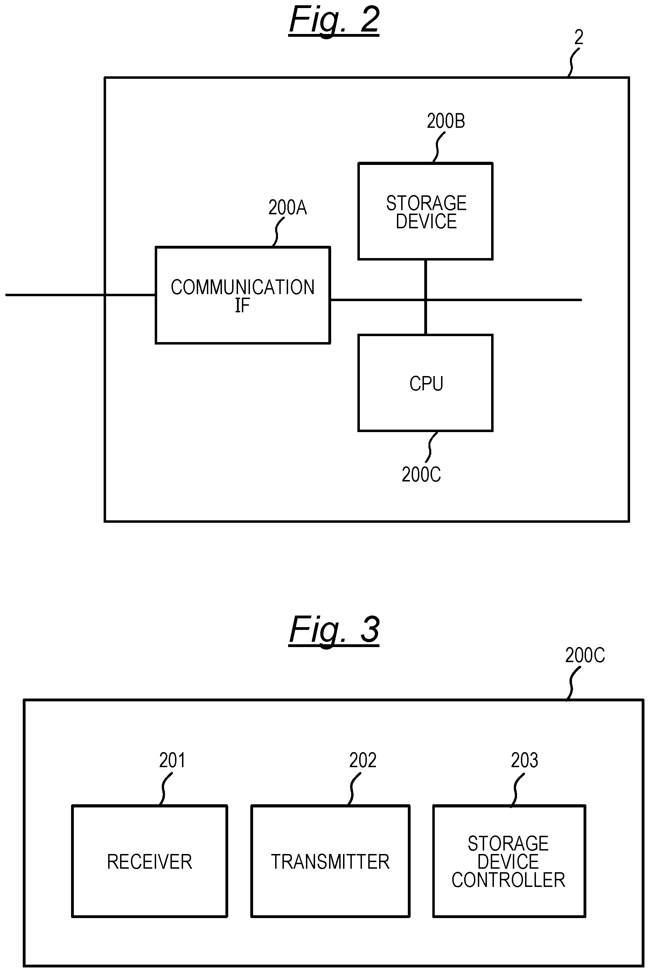

Figs. 2 and 3 are configuration diagrams of the server 2. Fig. 2 illustrates a main hardware configuration of the server 2, and the server 2 includes a communication IF 200A, a storage device 200B, a CPU 200C, and the like. Although not illustrated in Fig. 2, the server 2 may include an input device (for example, a mouse, a keyboard, a touch panel, or the like), a display device (cathode ray tube (CRT), liquid crystal display, organic EL display, or the like), and the like.

The communication IF 200A is an interface for communicating with other devices (for example, the first user terminal 3, the second user terminal 4, and the like).

The storage device 200B is, for example, a hard disk drive (HDD) or a semiconductor storage device (solid state drive (SSD)). Various data and information processing programs are stored in the storage device 200B. Note that some or all of the various data stored in the storage device 200B may be stored in an external storage device such as a universal serial bus (USB) memory or an external HDD or a storage device of another information processing apparatus coupled via the network 5. In this case, the server 2 refers to or acquires data stored in the external storage device or the storage device of another information processing apparatus, and stores the data in the external storage device or the storage device of another information processing apparatus.

The storage device 200B stores account information of the first user terminal 3, for example, an identification number, a name, a contact address (email address or telephone number) of the first user terminal 3, and an identification number of the second user terminal 4 owned by the second user (for example, one's own child). In addition, account information of the second user terminal 4, for example, an identification number and a name of the second user terminal 4, and the identification number of the first user terminal 3 owned by the first user (for example, a family member such as one's own parents or grandparents) are stored in the storage device 200B. In the storage device 200B, a log or the like including data transmitted and received by the first user terminal 3 and the second user terminal 4 is stored in association with the account. The storage device 200B for transmission to the second user terminal 4 stores a voice file (for example, a voice file of a message voiced by a person such as a voice actor, an actor, or an idol, a voice file of a message by a voice synthesis engine such as vocaloid (registered trademark), or the like) that can be downloaded and used.

The CPU 200C controls the server 2 according to the present embodiment, and includes a ROM, a RAM, and the like (not illustrated).

Fig. 3 is a functional block diagram of the server 2. As illustrated in Fig. 3, the server 2 includes functions such as a receiver 201, a transmitter 202, and a storage device controller 203. Note that the functions illustrated in Fig. 3 are implemented by the CPU 200C executing an information processing program stored in the storage device 200B.

The receiver 201 receives data transmitted from the first user terminal 3, the second user terminal 4, and the like, for example, voice data, a setting instruction, or the like.

The transmitter 202 transmits the data received from the first user terminal 3, for example, voice data or a setting instruction to the second user terminal 4. In addition, the transmitter 202 transmits the data received from the second user terminal 4, for example, voice data to the first user terminal 3.

The storage device controller 203 stores the data transmitted and received by the first user terminal 3 and the second user terminal 4 in the storage device 200B in association with the identification number of the account or the user terminal that has transmitted and received the data.

### (First User Terminal 3)

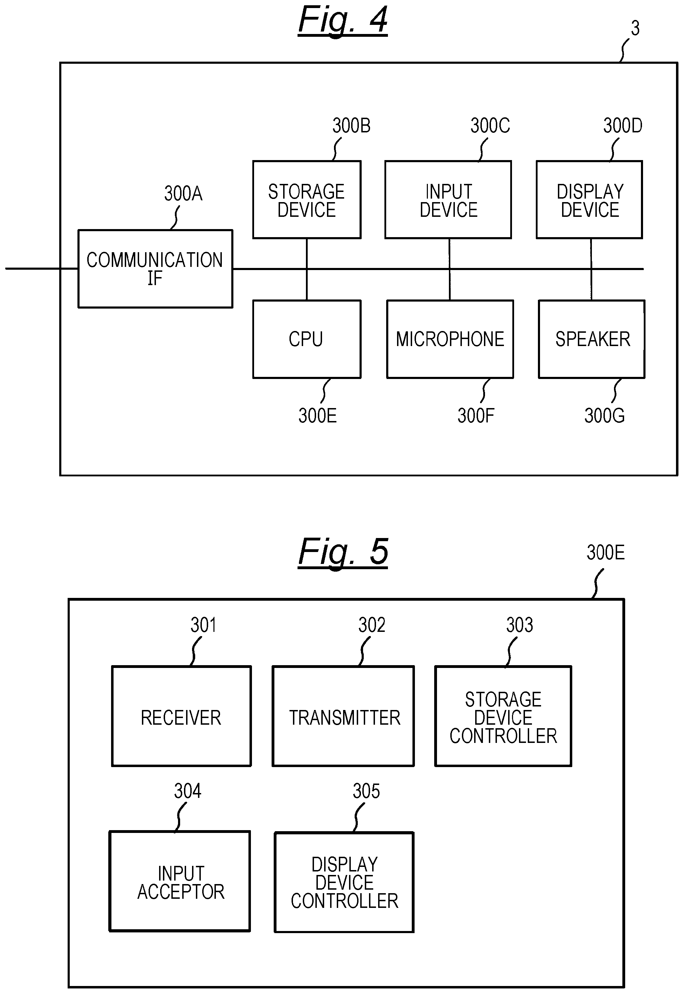

The first user terminal 3 is a terminal owned by the first user, and is, for example, a smartphone or the like in which application software is installed. The first user can transmit and receive a voice message to and from the second user (for example, one's own child) by transmitting and receiving voice data to and from the second user terminal 4 registered using the first user terminal 3. Fig. 4 illustrates a main hardware configuration of the first user terminal 3, and includes a communication IF 300A, a storage device 300B, an input device 300C, a display device 300D, a CPU 300E, a microphone 300F, a speaker 300G, and the like.

The communication IF 300A is an interface for communicating with another device (in the present embodiment, the server 2).

The storage device 300B is, for example, a hard disk drive (HDD) or a semiconductor storage device (solid state drive (SSD)). The storage device 300B stores a terminal identification number, an information processing program (application software), a preset message (for example, a message voiced by a person such as a voice actor, an actor, or an idol, a message by a voice synthesis engine such as vocaloid (registered trademark), a message inputted by the first user (the message inputted by the first user includes a voice message voiced by the first user and a text message inputted by text), or a message downloaded from the server 2) to be transmitted to the second user terminal 4, and the like. In addition, the storage device 300B stores, for example, data transmitted and received between the first user terminal 3 and the second user terminal 4. The terminal identification number is a number for identifying the first user terminal 3. By assigning the terminal identification number to the data transmitted from the first user terminal 3, the server 2 can determine from which first user terminal 3 the received data has been transmitted. Note that an internet protocol (IP) address, a media access control (MAC) address, or the like may be used as the terminal identification number, and the server 2 may assign the terminal identification number to the first user terminal 3.

The input device 300C is, for example, an input device such as a keyboard, a mouse, or a touch panel, but may be another device or equipment as long as input is possible. Furthermore, a voice input device may be used.

The display device 300D is, for example, a liquid crystal display, a plasma display, an organic EL display, or the like, but may be another device or equipment (for example, CRT: cathode ray tube) as long as display is possible.

The CPU 300E controls the first user terminal 3 according to the present embodiment, and includes a ROM and a RAM (not illustrated).

The microphone 300F is an acoustic device that converts a sound into an electric signal. The user of the first user terminal 3 can input a voice (for example, a message to be transmitted to the second user terminal 4 or the like) using the microphone 300F. The inputted voice is transmitted to the server 2 by a transmitter 302 described later.

The speaker 300G is an acoustic device that converts an electric signal into a sound. The speaker 300G reproduces, for example, voice data transmitted from the second user terminal 4 via the server 2 and stored in the storage device 300B.

Fig. 5 illustrates a functional block diagram of the first user terminal 3, and the first user terminal 3 has functions of a receiver 301, a transmitter 302, a storage device controller 303, an input acceptor 304 (acceptor), a display device controller 305, and the like. Note that the functions illustrated in Fig. 5 are implemented by the CPU 300E executing an information processing program stored in the storage device 300B.

The receiver 301 receives, for example, data transmitted from the server 2.

For example, the transmitter 302 transmits data to the server 2 according to an input operation accepted by the input acceptor 304.

The storage device controller 303 controls the storage device 300B. For example, the storage device controller 303 stores the data and the like transmitted and received by the first user terminal 3 and the second user terminal 4 in the storage device 300B in association with the identification number of the account or the user terminal that has transmitted and received the data. In addition, the storage device controller 303 stores, for example, voice data transmitted and received between the first user terminal 3 and the second user terminal 4 in the storage device 300B.

The input acceptor 304 accepts an input operation from the input device 300C.

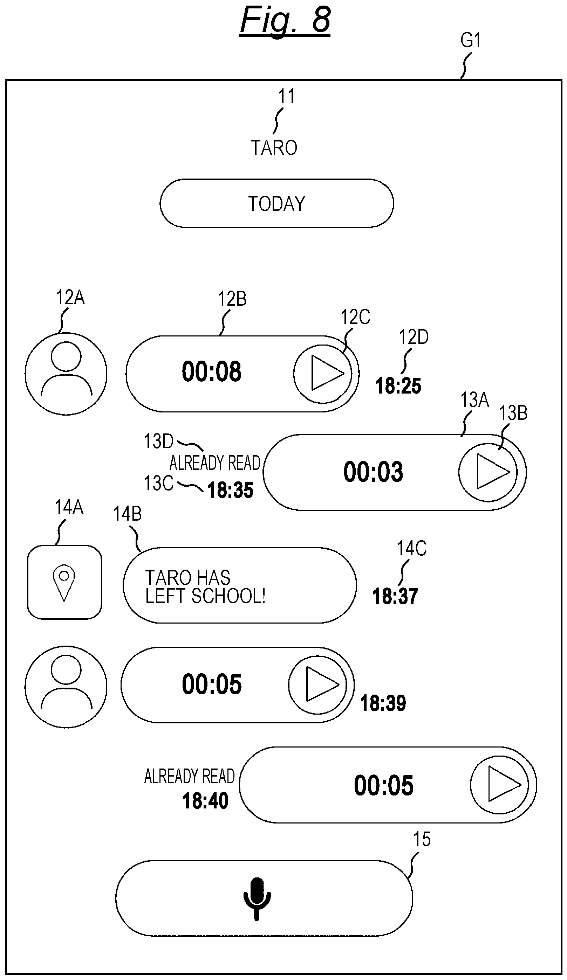

The display device controller 305 controls the display device 300D, and displays, for example, screens illustrated in Figs. 8 to 11 described later on the display device 300D.

### (Second User Terminal 4)

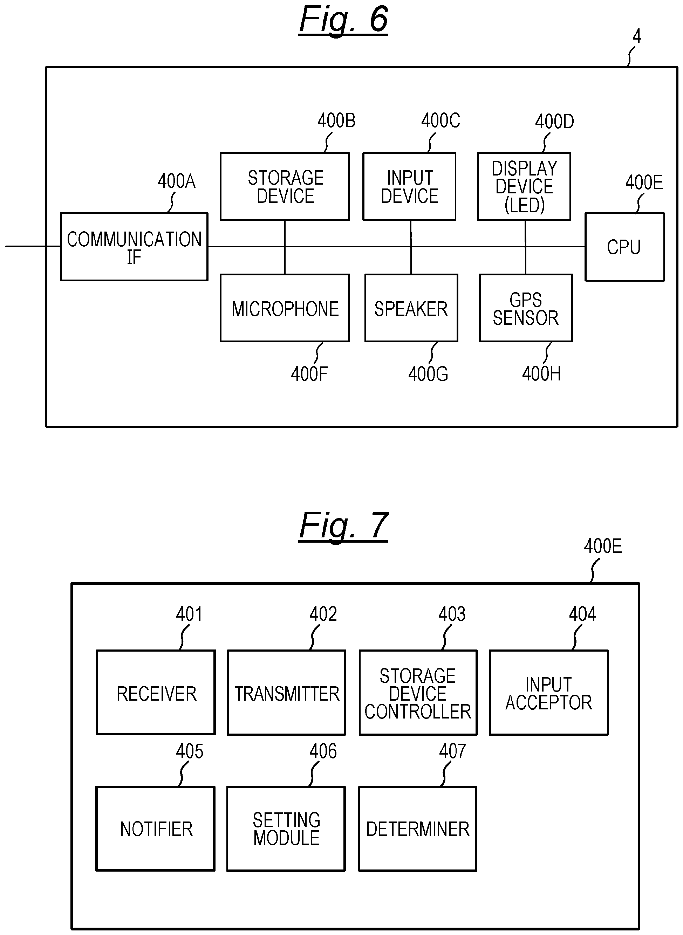

The second user terminal 4 is a terminal used by the second user of the present information processing system 1. The second user can exchange a voice with the first user (for example, one's own family) by transmitting and receiving voice data to and from the first user terminal 3 registered using the second user terminal 4. Fig. 6 illustrates a main hardware configuration of the second user terminal 4, and the second user terminal 4 includes a communication IF 400A, a storage device 400B, an input device 400C, a display device 400D (LED), a CPU 400E, a microphone 400F, a speaker 400G, a GPS sensor 400H, and the like.

The communication IF 400A is an interface for communicating with another device (in the present embodiment, the server 2).

The storage device 400B is, for example, a hard disk drive (HDD) or a semiconductor storage device (solid state drive (SSD)). The storage device 400B stores a terminal identification number, an information processing program, voice data transmitted from the first user terminal 3, and the like. The terminal identification number is a number for identifying the second user terminal 4. By assigning the terminal identification number to the data transmitted from the second user terminal 4, the server 2 can determine from which second user terminal 4 the received data has been transmitted. Note that an internet protocol (IP) address, a media access control (MAC) address, or the like may be used as the terminal identification number, and the server 2 may assign the terminal identification number to the second user terminal 4.

The input device 400C is, for example, an input device such as a keyboard, a mouse, or a touch panel, but may be another device or equipment as long as input is possible. Furthermore, a voice input device may be used. The second user can operate the input device 400C to input a voice and transmit the voice to the first user terminal 3 or reproduce voice data transmitted from the first user terminal 3.

The display device 400D is, for example, an LED. The display device 400D is controlled by a notifier 405 described later, and notifies that a voice is received by lighting or blinking with a set pattern or a predetermined pattern.

The CPU 400E controls the second user terminal 4 according to the present embodiment, and includes a ROM and a RAM (not illustrated).

The microphone 400F is an acoustic device that converts a sound into an electric signal. The user of the second user terminal 4 can input a voice using the microphone 400F. The inputted voice is transmitted to the server 2 by a transmitter 402 described later.

The speaker 400G is an acoustic device that converts an electric signal into a sound. The speaker 400G reproduces, for example, voice data transmitted from the first user terminal 3 via the server 2 and stored in the storage device 400B. Furthermore, the speaker 400G is controlled by the notifier 405 to be described later, and notifies that the voice has been received by generating a sound with a set pattern or a predetermined pattern.

The GPS sensor 400H receives a signal including data of the time of an atomic clock mounted on a satellite, data of a celestial calendar (orbit) of the satellite, and the like from a GPS satellite, calculates a distance from the satellite based on a difference between a transmission time and a reception time of the received signal, and specifies a current position. In addition, the GPS sensor 400H outputs the specified current position.

Fig. 7 illustrates a functional block diagram of the second user terminal 4, and the second user terminal 4 has functions of a receiver 401, a transmitter 402, a storage device controller 403, an input acceptor 404, a notifier 405, a setting module 406, a determiner 407 (first to third determiners), and the like. Note that the functions illustrated in Fig. 7 are implemented by the CPU 400E executing an information processing program stored in the storage device 400B.

The receiver 401 receives, for example, data (for example, voice data) transmitted from the server 2 and a setting instruction for setting a notification pattern when notifying that the data has been received.

The transmitter 402 transmits data, for example, voice data to the server 2 according to an input operation accepted by the input acceptor 304, for example. In addition, the transmitter 402 transmits a determination result by the determiner 407 to the first user terminal 3 (via the server 2). Further, the transmitter 402 transmits a recommendation instruction for recommending setting of a notification pattern of the notifier 405 to a predetermined notification pattern to the first user terminal 3 according to the determination result by the determiner 407.

The storage device controller 403 controls the storage device 400B. For example, the storage device controller 403 controls the storage device 400B to write and read data. The storage device controller 403 stores, for example, data received by the receiver 401 in the storage device 400B.

The input acceptor 404 accepts an input operation from the input device 400C. The input acceptor 404 accepts, for example, an operation of reproducing voice data stored in the storage device 400B.

The notifier 405 notifies that the receiver 401 has received data. For example, the notifier 405 notifies that the receiver 401 has received data by lighting or blinking the display device 400D (LED) or generating a sound from the speaker based on a notification pattern set by the setting module 406.

The setting module 406 sets the notification pattern of the notifier 405 based on the setting instruction received by the receiver 401. In addition, the setting module 406 sets the notification pattern of the notifier 405 to a predetermined notification pattern according to the determination result by the determiner 407. Note that the notification pattern includes notification (first notification pattern) by reproduction of the data received by the receiver 401. In the case of this notification pattern, the notifier 405 notifies that the receiver 401 has received data by reproducing the data received by the receiver 401.

The determiner 407 determines a state related to the notification of the data received by receiver 301, for example, whether voice data has been reproduced. In addition, the determiner 407 determines whether at least one or more of a date and time, a position, and an attribute of the first user terminal 3 satisfy a predetermined condition. Here, the date and time may be a current date and time, and the position may be a current position.

### (Display Screen)

Figs. 8 to 11 are diagrams illustrating an example of a screen G1 displayed on the display device 300D of the first user terminal 3. Hereinafter, an example of the screen G1 displayed on the display device 300D of the first user terminal 3 will be described with reference to Figs. 8 to 11. Note that the same components as those described with reference to Figs. 1 to 7 are denoted by the same reference numerals, and redundant description will be omitted.

As illustrated in Fig. 8, on the display device 300D, voice data transmitted and received between the first user terminal 3 and the second user terminal 4 is displayed in chronological order in units of voice files (hereinafter, also referred to as timeline display).

In the example illustrated in Fig. 8, a name 11 (which may be a handle name) of the second user is displayed at a top of the screen G1. On a left side of the screen G1, a display frame 12B indicating voice data (a voice file of the second user) transmitted from the second user terminal 4 is displayed together with a time 12D (using time stamp information) at which the voice data is transmitted and an icon 12A (an icon indicating the second user). Furthermore, when a reproduction button 12C is selected (tap operated), the voice data (voice file) corresponding to the display frame 12B is reproduced, and the user can listen to the voice.

Further, on a right side of the screen G1, a display frame 13A indicating voice data (a voice file of the first user) transmitted from the first user terminal 3 to the second user terminal 4 is displayed together with a time 13C at which the voice data is transmitted (using time stamp information). In addition, in a vicinity of the display frame 13A, a state 13D (for example, whether the second user terminal 4 has reproduced the voice data and the like) related to notification of the voice data is also written. Further, when a reproduction button 13B is selected, voice data (voice file) corresponding to the display frame 13A is reproduced, and the user can listen to the voice.

Furthermore, on the left side of the screen G1, a comment 14B indicating a status automatically transmitted from the second user terminal 4 or the server 2 according to the state of the second user terminal 4 (for example, time or position) is displayed together with a time 14D (using time stamp information) at which the comment 14B has been transmitted and an icon 14A (an icon indicating the second user terminal 4).

In a case where the first user desires to transmit voice data to the second user terminal 4, the first user operates the input device 300C such as a touch panel to select an icon 15 imitating a microphone displayed on a lower portion of the screen G1.

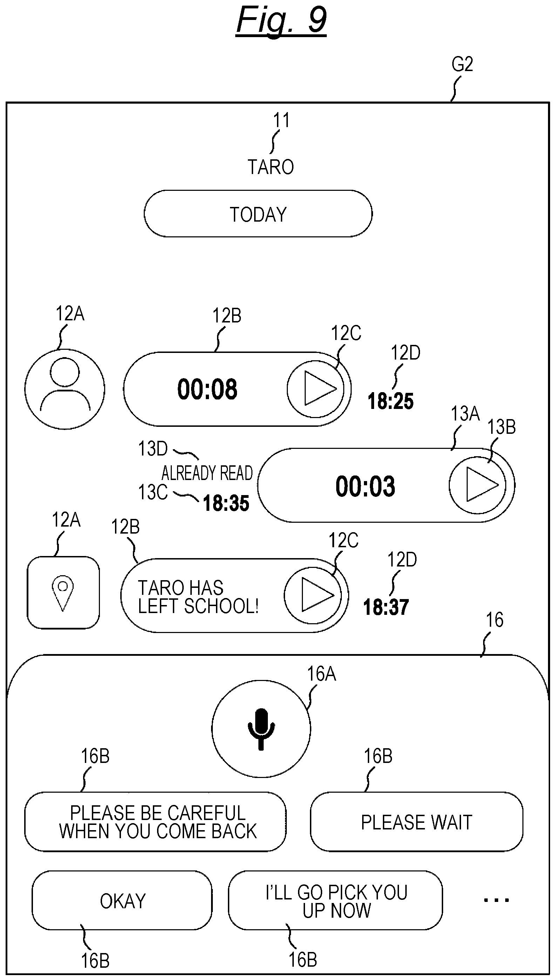

A screen G2 illustrated in Fig. 9 is a screen that transitions when the icon 15 described with reference to Fig. 8 is selected (tap operated). As illustrated in Fig. 9, when the icon 15 is selected in Fig. 8, a display frame 16 for transmitting a message to the second user terminal 4 appears to rise from a lower side of the screen G2. The first user can record a voice and transmit the voice to the second user terminal 4 by operating the input device 300C such as a touch panel and selecting a microphone icon 16A displayed in the display frame 16 of the screen G2. Note that, when the microphone icon 16A is selected, a display mode (for example, a color of the icon) of the microphone icon 16A is changed to indicate that recording has started. When the first user finishes speaking a message (for example, "I will go to pick you up now" and the like) and reselects the microphone icon 16A again, the display mode (for example, a color of the icon) of the microphone icon 16A returns to an original state, and it is indicated that the recording is finished.

Further, a plurality of messages of a message 16B preset in the storage device 300B, a message 16B inputted by the first user, a message 16B downloaded from the server 2, and the like are displayed below the microphone icon 16A, and the first user can transmit the selected message 16B to the second user terminal 4 by selecting any one of the plurality of displayed messages 16B by operating the input device 300C such as a touch panel.

Note that the message inputted by the first user includes a voice message voiced by the first user using the microphone 300F as described above and a text message inputted by text by the first user operating the input device 300C. Here, the voice message is transcribed (converted into text) and displayed as a title of a voice file.

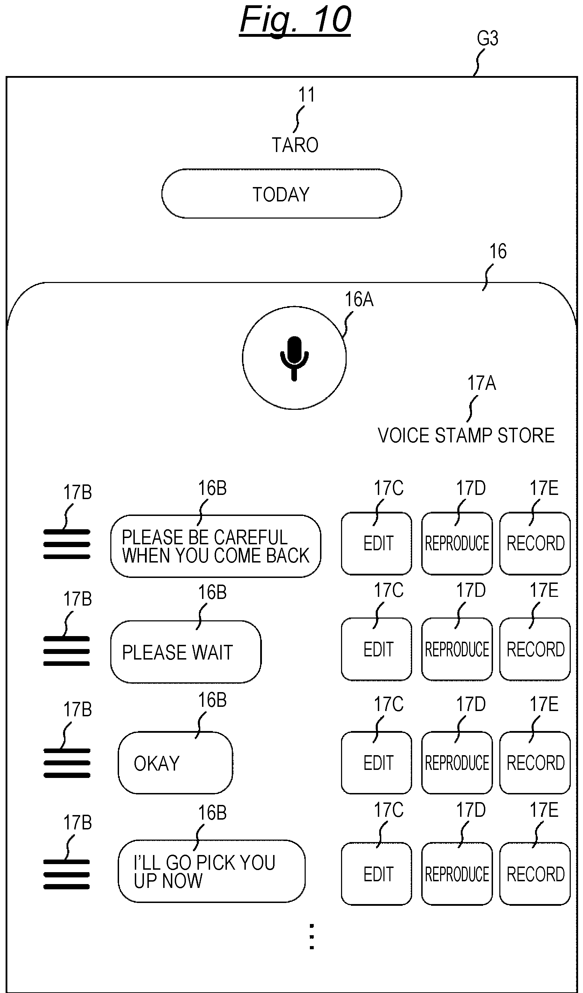

Fig. 10 illustrates an example of a screen G3 on which the voice message is transcribed (converted into text) and displayed as the title of the voice file. As illustrated in Fig. 10, on the screen G3, a message of a voice file obtained by transcribing (converting into text) the voice message is displayed as a title 16B. The first user operates the input device 300C such as a touch panel to select a voice stamp store 17A on the screen G3, so that the voice file (for example, a voice file of a message voiced by a person such as a voice actor, an actor, or an idol, a voice file of a message by a voice synthesis engine such as vocaloid (registered trademark), or the like) can be downloaded and used from the server 2.

In addition, the first user can change a display order of the titles 16B by operating the input device 300C such as a touch panel and selecting a replacement button 17B (long press, tap operation, or the like) disposed on a left side of the title 16B.

In addition, the first user can edit the title 16B by operating the input device 300C such as a touch panel and selecting an edit button 17C (a long press, a tap operation, or the like) disposed on a right side of the title 16B.

In addition, the first user operates the input device 300C such as a touch panel to select a reproduction button 17D (long press, tap operation, or the like) disposed on the right side of the title 16B, thereby reproducing (listening to) the voice file serving as the source of the title 16B.

Furthermore, the first user operates the input device 300C such as a touch panel to select a recording button 17E (long press, tap operation, or the like) disposed on the right side of the title 16B, so that the voice file serving as the source of the title 16B can be recorded again.

Note that the titles 16B of the voice files may be set to be displayed in descending order of use frequency. Note that, in a case of displaying in descending order of use frequency, it is preferable to calculate the use frequency of the message in consideration of the notation of the message (for example, similarity of the message).

Further, the messages 16B displayed on the screen G2 of Fig. 9 are preferably displayed in an order according to a message use frequency by the first user or setting by the first user. For example, in a case where the messages are displayed according to the use frequency, it is preferable that the messages are displayed in descending order of the use frequency. Further, the messages 16B displayed on the screen G2 of Fig. 9 may be displayed in an order according to setting by the first user. In this case, similarly to the description with reference to Fig. 10, the first user may manually operate the input device 300C to rearrange and set the display order of the messages 16B. Alternatively, preset messages 16B may be set to be displayed in descending order of the use frequency, or the messages 16B inputted by the first user may be set to be displayed in descending order of use frequency. Note that, in a case of displaying in descending order of use frequency, it is preferable to calculate the use frequency of the message in consideration of the notation of the message (for example, similarity of the message).

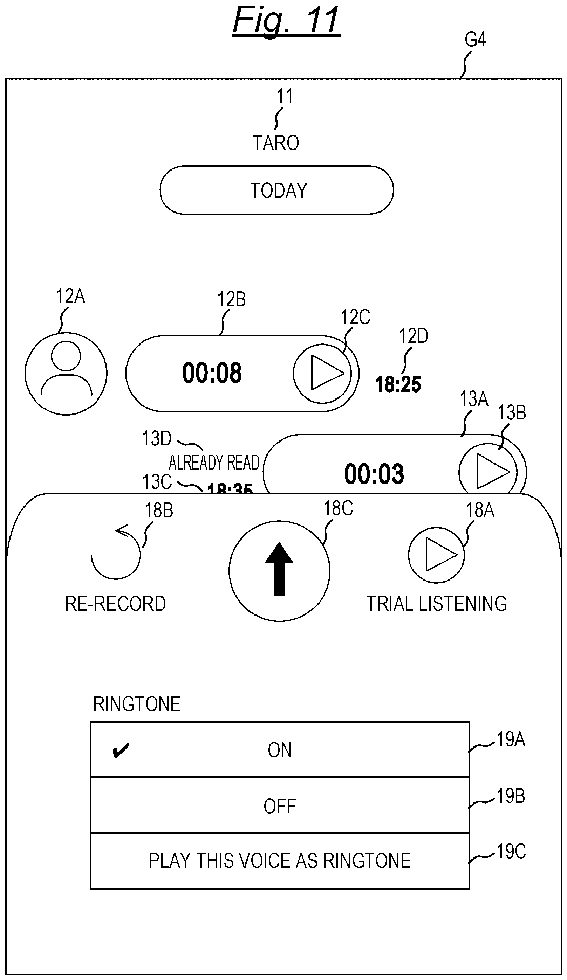

A screen G4 illustrated in Fig. 11 is a screen that transitions when the microphone icon 16A described with reference to Fig. 9 is selected (tap operated) to record a voice, or when the message 16B displayed below the microphone icon 16A is selected. As illustrated in Fig. 11, the first user operates the input device 300C such as a touch panel to select an icon 18A on the screen G4, so that the first user can listen to and check the recorded voice. In addition, the first user operates the input device 300C such as a touch panel to select an icon 18B of the screen G4, thereby transitioning to the screen G2 and re-recording the voice. In addition, the first user may select a message on the screen G2 that has transitioned instead of re-recording the voice.

In addition, the first user can set a notification pattern when notifying that the second user terminal 4 has received a message from the first user terminal 3. In the example illustrated in Fig. 11, the first user can select a notification pattern from "a ringtone ON" 19A, "a ringtone OFF" 19B, and "sound this voice as a ringtone" 19C. When the first user selects any one of the 19A to 19C, a check mark is displayed in the selected item ("ringtone ON" 19A is selected in the example illustrated in Fig. 11). In the example illustrated in Fig. 11, the notification pattern is selected from three notification patterns, but the notification pattern is not limited to the examples illustrated in Fig. 11. For example, when the "ringtone ON" 19A is selected, a configuration may be adopted in which a ringtone can be selected, or a configuration in which vibration can be selected as a notification pattern.

When the first user operates the input device 300C such as a touch panel to select a transmission icon 18C on the screen G4, the recorded voice data or data corresponding to the selected message 16B is transmitted to the server 2 together with the setting instruction of the notification pattern.

### (Information Processing)

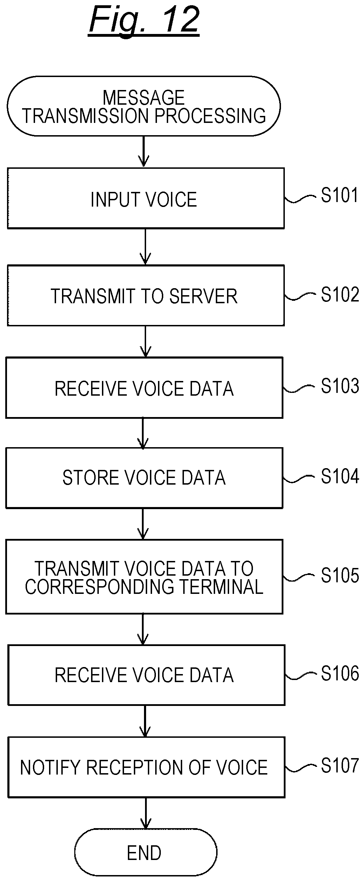

Figs. 12 to 15 are flowcharts illustrating an example of information processing of the information processing system 1. Hereinafter, information processing of the information processing system 1 will be described with reference to Figs. 12 to 15. Note that the same components as those described with reference to Figs. 1 to 11 are denoted by the same reference numerals, and redundant description will be omitted.

### (Message Transmission Processing)

Fig. 12 is a flowchart illustrating an example of message transmission processing of the information processing system 1. Hereinafter, an example of message transmission processing of the information processing system 1 will be described with reference to Fig. 12. In Fig. 12, a case where voice data is transmitted from the second user terminal 4 to the first user terminal 3 will be described.

### (Step S101)

The second user operates the input device 400C of the second user terminal 4 to input a voice.

### (Step S102)

The inputted voice is converted into an electric signal by the microphone 400F and then transmitted as voice data from the transmitter 402 to the server 2. Data such as an identification number of the second user terminal 4 and a time stamp is assigned to the data transmitted from the second user terminal 4.

### (Step S103)

The receiver 201 of the server 2 receives the voice data transmitted from the second user terminal 4.

### (Step S104)

The storage device controller 203 of the server 2 stores the voice data transmitted by the second user terminal 4 in the storage device 200B in association with the identification number of the account or the user terminal that has transmitted and received the data.

### (Step S105)

The transmitter 202 of the server 2 refers to the storage device 200B, specifies the identification number of the first user terminal 3 associated with an identification number assigned to the voice data received by the receiver 201, and transmits the voice data transmitted from the second user terminal 4 to the specified first user terminal 3.

### (Step S106)

The receiver 301 of the first user terminal 3 receives the voice data transmitted from the server 2.

### (Step S107)

The notifier 311 of the first user terminal 3 notifies that a voice has been received.

### (Message Transmission Processing)

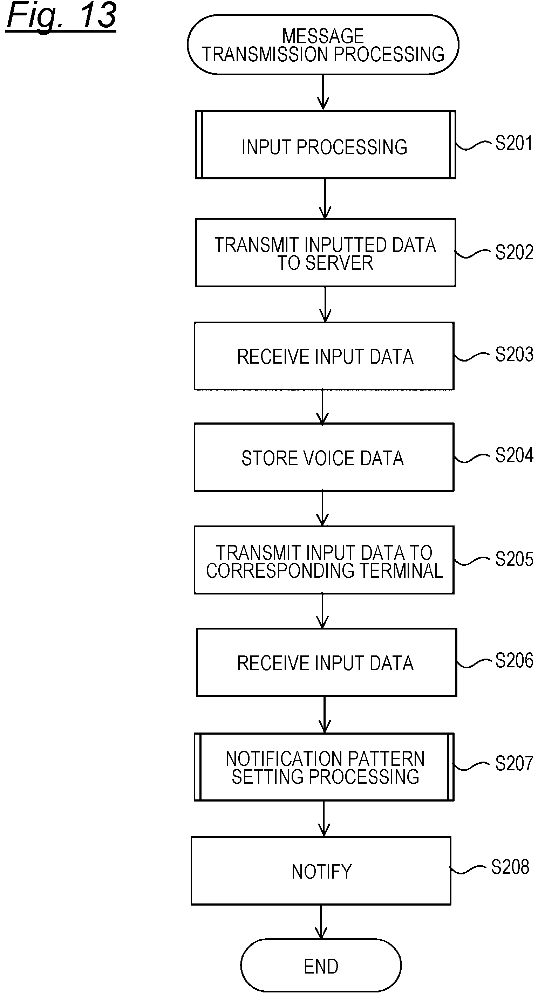

Fig. 13 is a flowchart illustrating an example of message transmission processing of the information processing system 1. Hereinafter, an example of message transmission processing of the information processing system 1 will be described with reference to Fig. 13. In Fig. 13, a case where voice data is transmitted from the first user terminal 3 to the second user terminal 4 will be described.

### (Step S201)

The first user operates the input device 300C of the first user terminal 3 to input a message to be transmitted to the second user terminal 4 and a setting instruction of a notification pattern. This input operation will be described later.

### (Step S202)

The transmitter 302 of the first user terminal 3 transmits the inputted input data to the server 2. Data such as an identification number of the first user terminal 3 and a time stamp is assigned to the input data transmitted from the first user terminal 3.

### (Step S203)

The receiver 201 of the server 2 receives the input data transmitted from the first user terminal 3.

### (Step S204)

The storage device controller 203 of the server 2 stores voice data among the input data transmitted by the first user terminal 3 in the storage device 200B in association with the identification number of the account or the user terminal that has transmitted and received the data.

### (Step S205)

The transmitter 202 of the server 2 refers to the storage device 200B, specifies an identification number of the second user terminal 4 associated with the identification number assigned to the voice data received by the receiver 201, and transmits the input data transmitted from the first user terminal 3 to the specified second user terminal 4.

### (Step S206)

The receiver 401 of the second user terminal 4 receives the input data transmitted from the server 2.

### (Step S207)

The setting module 406 of the second user terminal 4 sets a notification pattern. The setting of the notification pattern by the setting module 406 will be described later.

### (Step S208)

The notifier 405 of the second user terminal 4 notifies that data has been received with the notification pattern set by the setting module 406. The notifier 405 notifies that a message has been received by lighting or blinking, a sound, a vibration, or the like of the display device (LED) based on the notification pattern set by the setting module 406.

### (Input Processing)

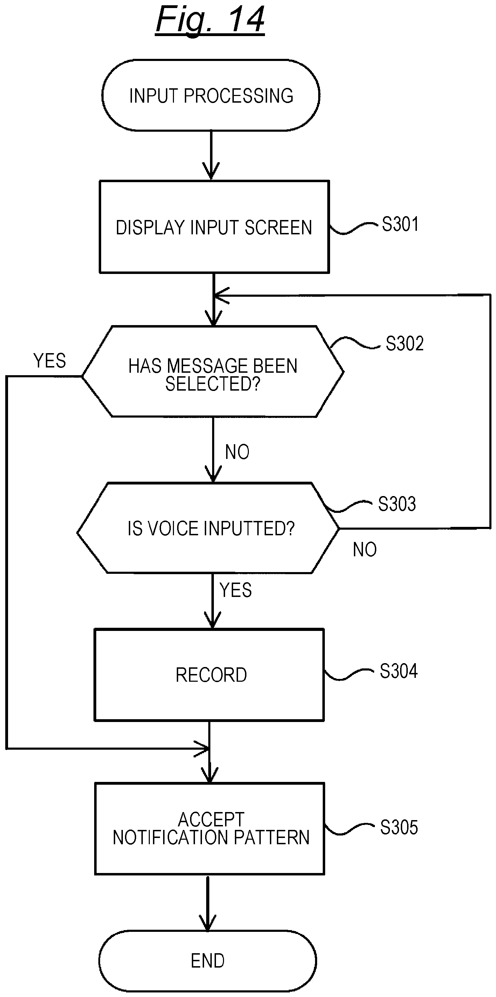

Fig. 14 is a flowchart illustrating an example of input processing in step S201 of Fig. 13. Hereinafter, an example of input processing in step S201 in Fig. 13 will be described with reference to Fig. 14.

### (Step S301)

The first user operates the input device 300C of the first user terminal 3 to display the screen G2 described with reference to Fig. 9 or the screen G3 described with reference to Fig. 10. The display device controller 305 of the first user terminal 3 causes the display device 300D to display the screen G2 or the screen G3.

### (Step S302)

The input acceptor 304 of the first user terminal 3 operates the input device 300C to determine whether any one of the messages 16B displayed on the screen G2 or the screen G3 has been selected. When any one of the messages 16B is selected (YES), the first user terminal 3 executes processing of step S305. When no message is selected (NO), the first user terminal 3 executes processing of step S303.

### (Step S303)

The input acceptor 304 of the first user terminal 3 operates the input device 300C to determine whether the microphone icon 16A displayed on the screen G2 or the screen G3 has been selected. When the microphone icon 16A has been selected (YES), the first user terminal 3 executes processing of step S304. When the microphone icon 16A has not been selected (NO), the first user terminal 3 returns to the processing of step S302.

### (Step S304)

The first user terminal 3 records the voice of the first user inputted by using the microphone. For example, the storage device controller 303 of the first user terminal 3 stores the voice of the first user inputted by using the microphone in the storage device 300B.

Note that the order of the processing in step S302 and the processing in steps S303 and S304 may be reversed.

### (Step S305)

The display device controller 305 of the first user terminal 3 causes the display device 300D to display the screen G4 described with reference to Fig. 11. The input acceptor 304 of the first user terminal 3 accepts a notification pattern inputted by the first user operating the input device 300C.

### (Notification Pattern Setting Processing)

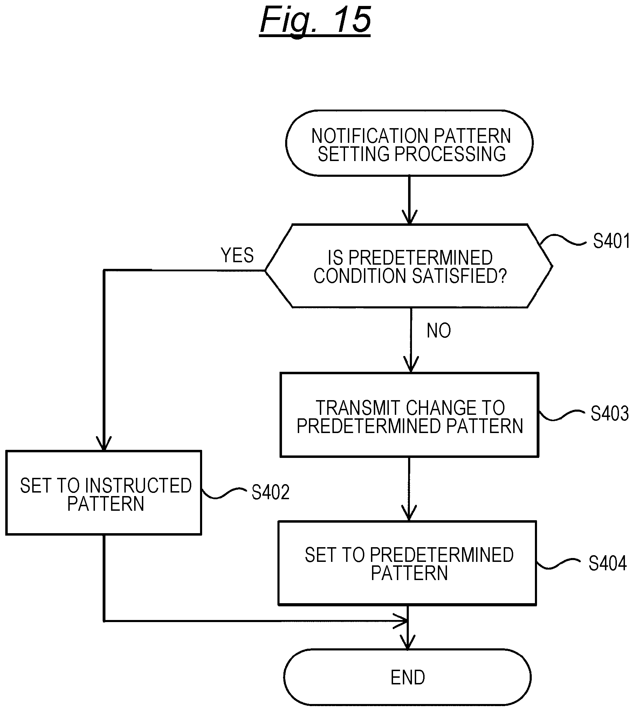

Fig. 15 is a flowchart illustrating an example of the notification pattern setting processing in step S207 of Fig. 13. Hereinafter, an example of the notification pattern setting processing in step S207 of Fig. 13 will be described with reference to Fig. 15.

### (Step S401)

The determiner 407 of the second user terminal 4 determines whether at least one or more of a date and time, a position, and an attribute of the first user terminal 3 satisfy a predetermined condition. When the predetermined condition is satisfied (YES), the second user terminal 4 executes processing of step S402. When the predetermined condition is not satisfied (NO), the second user terminal 4 executes processing of step S403.

### (Step S402)

The setting module 406 of the second user terminal 4 sets the notification pattern of the notifier 405 based on the setting instruction received by the receiver 401.

### (Step S403)

The transmitter 402 of the second user terminal 4 transmits, to the first user terminal 3 (via the server 2), setting of the notification pattern of the notifier 405 to a predetermined notification pattern.

### (Step S404)

The setting module 406 of the second user terminal 4 sets the notification pattern of the notifier 405 to the predetermined notification pattern.

In the above description, when at least one or more of the date and time, the position, and the attribute of the first user terminal 3 do not satisfy the predetermined condition, the notification pattern of the notifier 405 is set to the predetermined notification pattern. However, the determiner 407 may determine whether at least one or more of the date and time, the position, and the attribute and the status of a different terminal satisfy a predetermined condition, and when at least one or more of the date and time, the position, and the attribute of the first user terminal 3 do not satisfy the predetermined condition, recommend to set the notification pattern of the notifier 405 to the predetermined notification pattern and transmit this recommendation instruction to the first user terminal 3, and when a permission signal is received from the first user terminal 3, the setting module 406 may set the notification pattern of the notifier 405 to the predetermined notification pattern.

As described above, the second user terminal 4 includes the receiver 401 that receives data (for example, voice data) and a setting instruction for setting a notification pattern used when the reception of the data is notified from a different terminal, the notifier 405 that notifies that the receiver 401 has received the data, and the setting module 406 that sets a notification pattern of the notifier based on the setting instruction.

Normally, in a mobile terminal, notification of the terminal is set by an owner of the terminal in accordance with the situation or the like, and is not a specification that can be set by a third party such as a sender of a message. However, as described above, in the present invention, since a notification pattern of data reception can be set from the first user terminal 3 which is a different terminal, the convenience is high. For example, when a ringtone of a message is notified by a sound or the like during class at a school or a cram school, there is a risk of causing a trouble. On the other hand, when the terminal is always silent, there is a risk that the second user does not notice the message. However, since the notification pattern of the second user terminal 4 can be changed, the above problem can be solved.

The second user terminal 4 includes the determiner 407 that determines a state related to the notification of the data received by the receiver 401, and the transmitter 402 that transmits a determination result by the determiner 407 to the first user terminal 3 that is a different terminal.

As described above, since the state (for example, whether the user listens to a message or not) related to the notification of the data of the second user terminal 4 is transmitted to the first user terminal 3, it is possible to confirm whether the second user (for example, a child) is listening to the message on the first user terminal 3, so that convenience is improved.

In this manner, it is determined whether at least one or more of the date and time (for example, whether it is time for a school or a cram school), the position (for example, whether the user is at a school or a cram school) of the second user terminal 4, and the attribute (whether the user is a parent, a sibling, a grandparent, or the like) of the first user terminal 3 that is a different terminal satisfy a predetermined condition. In a case where the condition is not satisfied, for example, in a case where it is time for a school or a cram school, in a case where the user is at a school or a cram school, or in a case where the attribute of the first user terminal 3 is other than the parent, a recommendation instruction for recommending setting of the notification pattern of the notifier 405 to a predetermined notification pattern can be transmitted to the first user terminal 3 that is a different terminal, so that convenience is improved.

In addition, the second user terminal 4 includes the determiner 407 that determines whether at least one or more of the date and time, the position, and the attribute and the status of the different terminal satisfy a predetermined condition, and the setting module 406 sets the notification pattern of the notifier to a predetermined notification pattern according to the determination result by the determiner 407.

In this manner, it is determined whether at least one or more of the date and time (for example, whether it is time for a school or a cram school) and the position (for example, whether the user is at a school or a cram school) of the second user terminal 4, and the attribute (whether the user is a parent, a sibling, a grandparent, or the like) of the first user terminal 3 that is a different terminal satisfy a predetermined condition. For example, in a case where it is time for a school or a cram school, in a case where the user is at a school or a cram school, or in a case where the attribute of the first user terminal 3 is other than the parent, the notification pattern of the notifier 405 can be set to a predetermined notification pattern, so that convenience is improved.

Note that the second user terminal 4 may include the determiner 407 that determines whether at least one or more of the date and time, the position, and the attribute and the status of a different terminal satisfy a predetermined condition, and the transmitter 402 that transmits a recommendation instruction for recommending setting of the notification pattern of the notifier 405 to a predetermined notification pattern to the first user terminal 3 that is a different terminal according to the determination result by the determiner 407.

In addition, it is preferable that the date and time be the current date and time, or the position be the current position, or both. By setting the date and time to be the current date and time, or the position to be the current position, or both, it is possible to determine whether the second user is currently at a time of a school or a cram school or whether the second user is at a school or a cram school, for example.

Furthermore, in the present embodiment, the notification pattern includes notification by reproduction of data as the first notification pattern, and the notifier 405 notifies that data has been received by reproduction of the data when the receiver 401 receives a setting instruction set in the first notification pattern.

In this way, since the notification can be performed by reproducing the message, convenience is improved.

Note that in the present embodiment, the receiver 401 of the second user terminal 4 receives data and a setting instruction from the first user terminal 3 that is a different terminal via the server 2 (information processing apparatus), but the first user terminal 3 and the second user terminal 4 may transmit and receive the data (for example, voice data) and the setting instruction without via the server 2 (information processing apparatus) (for example, by a method such as peer to peer).

### [First Modification of Embodiment]

Note that, in the above embodiment, the first user terminal 3 may include a text converter that converts voice data into text data (text data), and text data obtained by converting at least a part of the voice data transmitted and received between the first user terminal 3 and the second user terminal 4 into text may be displayed (outputted) on the display device 300D. Since the voice can be confirmed by text, convenience is improved.

Further, a configuration may be adopted in which the text data obtained by converting the voice data transmitted to the second user terminal 4 is displayed (outputted) on the screen G2 as the message 16B described with reference to Fig. 9. Also in this case, the messages 16B (text data) are preferably displayed in order according to a use frequency of messages by the first user or setting by the first user.

### [Second Modification of Embodiment]

In addition, the server 2 may have at least a part of the functions of the first user terminal 3. For example, the server 2 may include a text converter that converts at least a part of the voice data transmitted and received between the first user terminal 3 and the second user terminal 4 described above into text data. Furthermore, in this case, the messages 16B (text data) may be configured such that the messages 16B are displayed (outputted) in order according to a message use frequency by the first user or setting by the first user in the first user terminal 3 by determining the order according to the use frequency of the message by the first user or the setting by the first user by the server.

In addition, the server 2 may have at least a part of the functions of the second user terminal 4 illustrated in Fig. 7. For example, the server 2 may have the function of the determiner 407 among the functions of the second user terminal 4. In this case, the server 2 determines whether at least one or more of a state related to data notification, a date and time, a position, and an attribute and a status of a different terminal satisfy a predetermined condition.

In addition, the server 2 or the first user terminal 3 may have at least a part of the functions of the second user terminal 4 illustrated in Fig. 7. For example, the server 2 or the first user terminal 3 may have a function of the determiner 407 or a function (recommender) that recommends setting a notification pattern of the notifier 405 to a predetermined notification pattern among the functions of the second user terminal 4. In this case, the server 2 or the first user terminal 3 determines whether at least one or more of the state related to the data notification, the date and time, the position, and the attribute and the status of the different terminal satisfy the predetermined condition.

In addition, each of the above embodiment and modifications is merely an example of embodying the present invention, and the technical scope of the present invention should not be interpreted in a limited manner. That is, the present invention can be implemented in various forms without departing from the gist or main features thereof.

### Reference Signs List

1 Information processing system
2 Server (information processing apparatus)
200A Communication IF
200B Storage device
200C CPU
201 Receiver
202 Transmitter
203 Storage device controller
3 First user terminal (information processing terminal)
300A Communication IF
300B Storage device
300C Input device
300D Display device
300E CPU
300F Microphone
300G Speaker
301 Receiver
302 Transmitter
303 Storage device controller
304 Input acceptor (acceptor)
305 Display device controller
4 Second user terminal
400A Communication IF
400B Storage device
400C Input device
400D Display device (LED)
400E CPU
400F Microphone
400G Speaker
400H GPS sensor
401 Receiver
402 Transmitter
403 Storage device controller
404 Input acceptor
405 Notifier
406 Setting module
407 Determiner
5 Network

## Claims

1. An information processing terminal comprising:
a receiver configured to receive data and a setting instruction for setting a notification pattern when notifying that the data has been received from a different terminal;
a notifier configured to notify that the receiver has received the data; and
a setting module configured to set a notification pattern of the notifier based on the setting instruction.

2. The information processing terminal according to claim 1, further comprising:
a first determiner configured to determine a state related to notification of the data received by the receiver; and
a first transmitter configured to transmit a determination result by the first determiner to the different terminal.

3. The information processing terminal according to claim 1, further comprising:
a second determiner configured to determine whether at least one or more of a date and time, a position, and an attribute and a status of the different terminal satisfy a predetermined condition; and
a second transmitter configured to transmit a recommendation instruction for recommending setting of the notification pattern of the notifier to a predetermined notification pattern to the different terminal according to a determination result by the second determiner.

4. The information processing terminal according to claim 1, further comprising:
a third determiner configured to determine whether at least one or more of a date and time, a position, and an attribute and a status of the different terminal satisfy a predetermined condition, wherein
the setting module sets
the notification pattern of the notifier to a predetermined notification pattern according to a determination result by the third determiner.

5. The information processing terminal according to claim 3, wherein
the date and time is a current date and time, or the position is a current position, or both.

6. The information processing terminal according to claim 1, wherein
the notification pattern includes notification by reproduction of the data as a first notification pattern, and
when the receiver receives a setting instruction set in the first notification pattern, the notifier notifies that the data has been received by reproducing the data.

7. The information processing terminal according to claim 1, wherein
the receiver of the information processing terminal receives
the data and the setting instruction from the different terminal via an information processing apparatus.

8. The information processing terminal according to claim 2, wherein
the first transmitter of the information processing terminal transmits
a determination result by the first determiner to the different terminal via an information processing apparatus.

9. The information processing terminal according to claim 3, wherein
the second transmitter of the information processing terminal transmits
the recommendation instruction to the different terminal via an information processing apparatus.

10. An information processing terminal comprising:
a transmitter configured to transmit data and a setting instruction for setting a notification pattern when notifying that the data has been received to a different terminal.

11. The information processing terminal according to claim 10, further comprising:
an acceptor configured to accept the setting instruction, wherein
the transmitter transmits
the setting instruction accepted by the acceptor to the different terminal.

12. The information processing terminal according to claim 11, wherein
the acceptor is capable of
accepting the setting instruction for each piece of the received data.

13. The information processing terminal according to claim 10, further comprising:
a first determiner configured to determine whether at least one or more of a date and time, a position of the different terminal, and an attribute and a status of the different terminal satisfy a predetermined condition; and
a recommender configured to recommend setting a notification pattern of the notifier to a predetermined notification pattern according to a determination result by the first determiner.

14. The information processing terminal according to claim 10, further comprising:
a second determiner configured to determine whether at least one or more of a date and time, a position of the different terminal, and an attribute and a status of the different terminal satisfy a predetermined condition, wherein
the transmitter transmits
a setting instruction for setting a notification pattern of the notifier to a predetermined notification pattern to the different terminal according to a determination result by the second determiner.

15. The information processing terminal according to claim 13, wherein
the date and time is a current date and time, or the position is a current position, or both.

16. The information processing terminal according to claim 10, further comprising:
an output module configured to output text data obtained by converting at least a part of voice data transmitted to the different terminal and voice data received from the different terminal into text.

17. The information processing terminal according to claim 16, wherein
the output module outputs
the text data in a mode according to a use frequency or setting of a user of the information processing terminal.

18. The information processing terminal according to claim 10, wherein
the transmitter of the information processing terminal transmits
the data and the setting instruction to the different terminal via an information processing apparatus.

19. The information processing terminal according to claim 16, wherein
the information processing terminal receives
voice data from the different terminal via an information processing apparatus.

20. An information processing apparatus comprising:
a receiver configured to receive, from a first terminal, data and a setting instruction for setting a notification pattern when notifying that the data has been received; and
a transmitter configured to transmit the data and the setting instruction received by the receiver to a second terminal different from the first terminal.

21. The information processing apparatus according to claim 20, further comprising:
a first determiner configured to determine a state related to notification of data in the second terminal, wherein
the transmitter transmits
a determination result by the first determiner to the first terminal.

22. The information processing apparatus according to claim 20, wherein
the receiver receives
a position of the second terminal from the second terminal,
the information processing apparatus further comprises a second determiner configured to determine whether at least one or more of a date and time, the position of the second terminal, an attribute of the first terminal, and an attribute of the second terminal satisfy a predetermined condition, and
the transmitter transmits
a recommendation instruction for recommending setting of a notification pattern of the second terminal to a predetermined notification pattern to the first terminal according to a determination result by the second determiner.

23. The information processing apparatus according to claim 20, wherein
the receiver receives
a position of the second terminal from the second terminal,
the information processing apparatus further comprises a third determiner configured to determine whether at least one or more of a date and time, the position of the second terminal, an attribute and a status of the first terminal, and an attribute and a status of the second terminal satisfy a predetermined condition, and
the transmitter transmits
a setting instruction for setting a notification pattern of the second terminal to a predetermined notification pattern to the second terminal according to a determination result by the third determiner.

24. The information processing apparatus according to claim 22, wherein
the date and time is a current date and time, or the position is a current position, or both.

25. The information processing apparatus according to claim 20, wherein
the receiver receives
voice data from at least one of the first terminal and the second terminal,
the information processing apparatus further comprises a text converter configured to convert at least a part of the voice data received by the receiver into text, and
the transmitter transmits
the text data converted into text by the text converter to the first terminal.

26. The information processing apparatus according to claim 25, wherein
the transmitter transmits
an output instruction instructing to output the text data in a mode according to a use frequency or setting of a user of the first terminal to the first terminal.

27. An information processing method comprising:
a receiver configured to receive data and a setting instruction for setting a notification pattern when notifying that the data has been received from a different terminal;
a notifier configured to notify that the receiver has received the data; and
a setting module configured to set a notification pattern of the notifier based on the setting instruction.

28. An information processing method comprising:
a step of transmitting, by a transmitter, data and a setting instruction for setting a notification pattern when notifying that the data has been received to a different terminal.

29. An information processing method comprising:
a step of receiving, by a receiver, data and a setting instruction for setting a notification pattern when notifying that the data has been received from a first terminal; and
a step of transmitting, by a transmitter, the data and the setting instruction received by the receiver to a second terminal different from the first terminal.

30. An information processing program for causing a computer to function as:
a receiver configured to receive data and a setting instruction for setting a notification pattern when notifying that the data has been received from a different terminal;
a notifier configured to notify that the receiver has received the data; and
a setting module configured to set a notification pattern of the notifier based on the setting instruction.

31. An information processing program for causing a computer to function as:
a transmitter configured to transmit data and a setting instruction for setting a notification pattern when notifying that the data has been received to a different terminal.

32. An information processing program for causing a computer to function as:
a receiver configured to receive data and a setting instruction for setting a notification pattern when notifying that the data has been received from a first terminal; and
a transmitter configured to transmit the data and the setting instruction received by the receiver to a second terminal different from the first terminal.
